Europäisches Patentamt

European Patent Office

Office européen des brevets

(19)

(11) Publication number: **0 200 511 B1**

## EUROPEAN PATENT SPECIFICATION

(12)

(45) Date of publication of patent specification: **19.02.92**    (51) Int. Cl.⁵: **B60P 7/08**

(21) Application number: **86303187.8**

(22) Date of filing: **28.04.86**

(54) **Anchor fitting for securing loads to retainer track.**

(30) Priority: **01.05.85 US 729486**

(43) Date of publication of application:
**10.12.86 Bulletin 86/45**

(45) Publication of the grant of the patent:
**19.02.92 Bulletin 92/08**

(84) Designated Contracting States:
**DE FR GB IT**

(56) References cited:
**US-A- 4 026 218**
**US-A- 4 230 432**
**US-A- 4 256 424**

(73) Proprietor: **ANCRA INTERNATIONAL CORPO-RATION**
**4880 West Rosecrans Avenue**
**Gardena, California 90248(US)**

(72) Inventor: **Jensen, Richard H.**
**2761 W. 225th Street**
**Torrance California 90503(US)**

(74) Representative: **Buchan, Ian Alexander et al**
**Eric Potter & Clarkson St.Mary's Court**
**St.Mary's Gate**
**GB-Nottingham NG1 1LE4(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to an anchor fitting for removably securing a load to a track member at a preselected position therealong, and more particularly to such a device which incorporates a plunger-clamp member for tightly joining the device to the track so as to obviate rattling of the fitting.

In vehicles such as aircraft, it is desirable to provide means for selectively anchoring various types of loads such as cargo, passenger seats, etc. in various positions along the floor of the aircraft. The anchoring must be reliable to assure that these loads do not become loose during travel, yet at the same time, it is necessary that it be relatively easy to attach and detach the anchoring device at any selected position in the vehicle to permit versatility in loading and conversation from one type of load to another.

Such anchor fittings are described in our US Patent Nos 4,026,218, issued May 31,1977 and 4,256,424, issued March 17, 1981. In the devices described in these patents, a separate plunger member is employed for engaging a selected notched portion of the track, there being a totally independent means in each instance for tightly retaining the fitting to the track so as to avoid rattling thereof.

In Patent No 4,026,218, such rattle-proof joinder between the fitting and the track is provided by means of a cam bar member which is driven into clamping engagement with the top surface of the track by means of an adjustment screw. In Patent No 4,256,424, the same end result is achieved by means of a "U"-shaped clamp member which has flanges extended therefrom, with the screw being used to drive the flanges against the track.

US Patent No 4,230,432 discloses a track fastener which includes a housing and two track studs that are secured to the underside of the housing. The track fastener also has a locking screw that has threads which are received by threads of an aperture in the housing and a track wedge member connected to the lower end portion of the locking screw which is shaped to have a portion thereof fit with cut-out portions of the track. The track wedge member has a flange portion that rests on the upper surface of the locking track.

It is an object of this invention to provide a simpler, more economical rattle-proof anchoring fitting for removably securing a load to a track member.

According to the present invention we provide an anchor fitting for securing a load to a slotted retainer track, said track having notched portions separated by narrow neck portions, said fittings comprising:

a main body portion having base pad means with a substantially flat bottom surface and shoulders extending there from in a direction substantially parallel to said surface,

a plunger-clamp member supported on said main body portion for movement relative thereto along an axis substantially normal to the flat bottom surfaces of the main body portion, said plunger-clamp member having a pair of opposing arms which overlap the opposite sides of said main body portion, a projection having a curved surface extending downwardly from each of said arms towards the base pad means, and a shoulder formed on each of said arms directly above each of said projections,

screw means slidably fitted through said plunger-clamp member in rotatable relationship thereto and threadably engaging said main body portion for slidably positioning the plunger-clamp member along said axis, and

means for restraining said screw means against any substantial longitudinal movement relative to the plunger-clamp member,

said screw means being rotated in a first direction to drive the plunger-clamp member along said axis to a first predetermined position whereat the plunger-clamp member projections from a plunger which is seated in one of the track notched portions and the shoulders formed in the plunger-clamp member and the shoulders of the base pad means are in firm abutment against the track to secure the fitting to the track, said screw means being rotated in a direction opposite said first direction to drive the plunger-clamp member along said axis to a second predetermined position whereat the fitting can be removed from the track.

The present invention affords an improvement over the aforementioned devices of the prior art in that it enables a device to incorporate the plunger and clamp member in a single unit which can be vertically positioned on the fitting by means of an adjustment screw which can be tightened down to both seat the plunger and clamp clamping shoulders, which are alongside the plunger, against the track. Thus, the device of the present invention is of simpler more economical construction than that of the prior art in that a separate plunger element is eliminated and the dual functions provided by the plunger and clamping unit of the prior art are incorporated into a single element.

Reference is now made to the accompanying drawings in which:

Figure 1 is a top plan view of a preferred embodiment of the invention;

Figure 2 is a view taken along the plane indicated by 2-2 in Figure 1;

Figure 3 is a bottom plan view of the preferred embodiment;

Figure 4 is a cross-sectional view taken along the plane indicated by 4-4 in Figure 2; and

Figure 5 is a side elevational view of a second embodiment of the invention.

Referring now to the Figures, a preferred embodiment of the invention is illustrated:

The anchor fitting includes a main body portion 14, which has a pair of spaced base pads 15 along the bottom portion thereof, these pads having shoulders 15a which extend therefrom, and flat bottom surfaces 15b. At one end of the main body portion is a post portion 18, which extends vertically, (i.e., substantially normal to surfaces 15a). Post portion 18 has an aperture 18a formed therein through which a suitable fastening member may be fitted in securing a load to the fitting which fitting, in turn, is secured to a track member as now to be described.

Shoulders 21a and 21b are formed along the opposite sides of the main body portion 14, directly above base pads 15. Supported on main body portion 14 for vertical motion relative thereto (i.e., along an axis substantially normal) to the flat bottom surface 15b of the pads, is a plunger-clamp member 23 which is vertically positionable by means of screw 25 which threadably engages main body portion 14. Screw 15 is rotatably retained on member 23, in a fixed position relative thereto vertically, by means of snap ring 26 which fits in a groove formed in the screw. The plunger-clamp member 23 is in the general shape of a "U" having a pair of opposing arm portions 23a and 23b. Extending from the bottom surface of plunger-clamp 23, is a plunger member 32, formed by a pair of opposing projections with similar outer curved surfaces 32a and inner straight flat surfaces, 32b. Inner surfaces 32b fit flush against the side portion of the main body 14 while outer surfaces 32a fit within the notched portions 30a of the support track 30 in mating engagement therewith, as to be explained further on in this specification. Shoulder portions 35a and 35b are formed on the plunger-clamp member directly above plunger element 32 and form clamping surfaces as to be later explained.

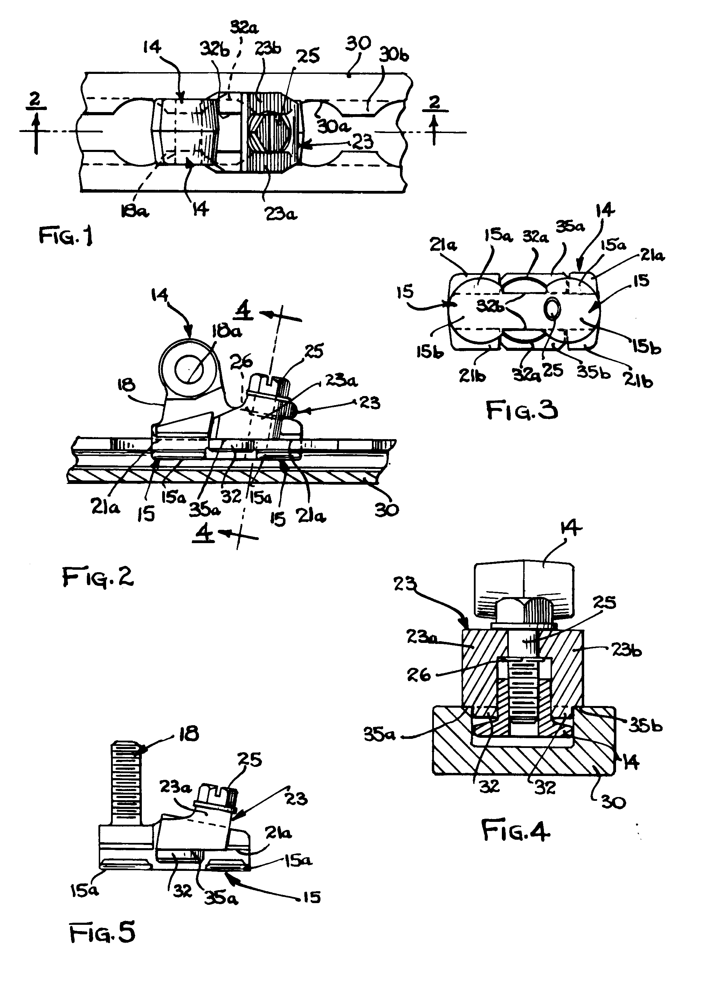

Referring now particularly to Figures 2 and 4, the anchor fitting is retained in track 30, which has notched portions 30a separated from each other by narrow neck portions formed by flanges 30b. Positioning and retention of the anchor fitting in the track is achieved first by turning screw 25 so as to raise the plunger-clamp 23 member upwardly, thereby enabling the setting of the fitting in a desired position along the track. When the fitting is positioned in the desired location on the track, the screw is turned so as to drive the plunger-clamp member downwardly so that the plunger element enters one of notches 30a and with increased tightening down of the screw, the shoulder portions 35a and 35b firmly abut against the top surface of the track in clamping engagement therewith while the top surfaces of the base pads 15 are drawn firmly against the inner walls of flanges 30b of the track. In this manner, the fitting is retained tightly in the track, such that rattling thereof is obviated.

Referring now to Figure 5, a second embodiment of the invention is illustrated. This second embodiment is generally similar to the first embodiment but differs in the construction of the post portion 18 thereof. In this embodiment, the post portion 18 is threaded so that seats or whatever else is to be attached to the fitting can be threadably attached thereto.

It thus can be seen that the present invention provides a highly economical yet effective means for tightly retaining an anchor fitting to a track member in a manner such that rattling therebetween is avoided.

## Claims

1. An anchor fitting for securing a load to a slotted retainer track (30), said track (30) having notched portions (30a) separated by narrow neck portions (30b), said fitting comprising:

a main body portion (14) having base pad means (15) with a substantially flat bottom surface and shoulders (15a) extending therefrom in a direction substantially parallel to said surface,

a clamp member (23) supported on said main body portion (14) for movement relative thereto along an axis substantially normal to the flat bottom surface of the main body portion (14), said clamp member (23) having a pair of opposing arms which overlap opposite sides of the main body portion, each arm having a shoulder (35a,35b) for engagement with the track,

screw means (25) slidably fitted through said clamp member (23) in rotatable relationship thereto and threadably engaging said main body portion (14) for slidably positioning the clamp member (23) along said axis, said screw means being rotatable in a first direction to drive the clamp member (23) along said axis to a first predetermined position whereat the shoulders (35a, 35b) of the clamp member and the shoulders (15a) of the base pad means (15) can be arranged in firm abutment against the track to secure the fitting to the track and said screw means (25) being rotatable in a direction opposite to the first direction to drive the clamp member (23) along said axis to a second predetermined position at which said fitting can be removed from the track, and

means (26) for restraining said screw means (25) against any substantial longitudinal movement relative to the clamp member (23), characterised in that

said clamp member (23) is in the form of a plunger-clamp member having a projection (32) having a curved surface (32a) extending downwardly from each of said arms (23a, 23b) toward the base pad means (15), directly below each of said shoulders (35a,35b) of the plunger-clamp member,

whereby when said plunger-clamp member (23) is in the first predetermined position the plunger clamp member projections (32) form a plunger which can be seated in one of the track notched portions.

2. A fitting according to Claim 1 wherein said base pad means (15) comprises a pair of spaced apart pads (15) with the projections (32) of the plunger-clamp member (23) positioned therebetween.

3. A fitting according to Claim 1 or 2 wherein the plunger-clamp member (23) is generally "U" shaped.

4. A fitting according to any of Claims 1 to 3 wherein said main body portion (14) further includes a post (18) which extends therefrom in a direction substantially normal to the bottom surface (15b) of said base pad means (15), said post (18) having an aperture (18a) formed therein for use in securing a load.

5. A fitting according to any of Claims 1 to 3 wherein said main body portion (14) further includes a post (18) which extends therefrom in a direction substantially normal to the bottom surface (15b) of said base pad means (15), said post (18) being threaded for use in securing a load.

**Revendications**

1. Un accessoire de fixation pour arrêter une marchandise sur un rail de maintien à fente (30), ledit rail (30) présentant des parties d'encoches (30a) séparées par des parties rétrécies étroites (30b), ledit accessoire comprenant:
   - une partie de corps principale (14) comportant un moyen de patin de base (15) avec une surface inférieure sensiblement plane et des épaulements (15a) partant de celle-ci, en une direction sensiblement parallèlement à ladite surface,
   - un organe de serrage (23) supporté sur ladite partie de corps principale (14), pour permettre un déplacement relatif par rapport à celle-ci, suivant un axe sensiblement normal à la surface inférieure plane de la partie de corps principale (14), ledit organe de serrage (23) comportant deux bras opposés qui chevauchent des faces opposées de la partie de corps principale, chaque bras comportant un épaulement (35a, 35b) pour la mise en contact avec le rail,
   - un moyen à vis (25) monté coulissant dans ledit organe de serrage (23), en relation de rotation sur celui-ci et fixant par son filetage ladite partie de corps principale (14) pour positionner de façon coulissante l'organe de serrage (23) sur ledit axe, ledit moyen à vis étant tournant dans un premier sens pour entraîner l'organe de serrage (23) sur ledit axe, en une première position prédéterminée en laquelle les épaulements (35a, 35b) de l'organe de serrage et les épaulements (15a) du moyen de patin de base (15) peuvent être placés en butée fermement contre le rail pour fixer l'accessoire au rail et ledit moyen à vis (25) étant tournant en sens opposé au premier sens, pour entraîner l'organe de serrage (23) sur ledit axe, en une seconde position prédéterminée, en laquelle ledit accessoire peut être enlevé du rail, et
   - un moyen (26) pour maintenir ledit moyen à vis (25) en empêchant tout déplacement longitudinal important par rapport à l'organe de serrage (23),
   caractérisé en ce que ledit organe de serrage (23) se présente sous la forme d'un organe de serrage à piston, présentant une saillie (32) comportant une surface incurvée (32a) s'étendant vers le moyen de patin de base (15), directement au-dessous de chacun desdits épaulements (35a, 35b) de l'organe de serrage à piston, de façon que lorsque ledit organe de serrage à piston (23) est dans la première position prédéterminé, les saillies (32) de l'organe de serrage à piston forment un piston qui peut reposer dans l'une des parties à encoche du rail.

2. Un accessoire selon la revendication 1, dans lequel que ledit moyen de patin (15) comprend deux patins (15) espacés, des saillies (32) de l'organe de serrage à piston (23) étant disposé entre eux.

3. Un accessoire selon la revendication 1 ou 2, dans lequel l'organe de serrage à piston (23) est de forme générale en "U".

4. Un accessoire selon l'une quelconque des revendications 1 à 3, dans lequel ladite partie de corps principale (14) comprend en outre un montant (18) qui sort de celle-ci en une direction sensiblement normale à la surface inférieure (15b) dudit moyen de patin de base (15), ledit montant (18) présentant en son sein une ouverture (18a) pour la fixation d'une charge.

5. Un accessoire selon l'une quelconque des revendications 1 à 3, dans lequel ladite partie de corps principale (14) comprend en outre un montant (18) sortant de celle-ci en une direction sensiblement normale à la surface inférieure (15b) dudit moyen de patin de base (15), ledit montant (18) étant fileté pour servir à la fixation d'une charge.

**Patentansprüche**

1. Verankerungbeschlag zum Befestigen einer Last in einer Halteschiene (30), die mittels schmaler Halsabschnitte (30b) getrennte Nutenabschnitte (30a) aufweist, wobei der Beschlag

- einen Hauptkörperabschnitt (14) mit Bodenansätzen (15), die eine im wesentlichen flache Bodenfläche und sich davon in einer im wesentlichen zur Bodenfläche parallelen Richtung erstreckende Schultern (15a) aufweisen,
- ein auf dem Hauptkörperabschnitt (14) relativ dazu längs einer zur flachen Bodenfläche des Hauptkörperabschnitts (14) im wesentlichen senkrechten Achse bewegbar gelagertes Klemmteil (23), das ein Paar gegenüberliegender Arme aufweist, die die gegenüberliegenden Seiten des Hauptkörperabschnitts überlappen, wobei jeder Arm eine Schulter (35a, 35b) zum Eingriff mit der Schiene aufweist,
- eine gleitbar durch das Klemmteil (23) geführte und relativ dazu drehbare Schraubeinrichtung (25), die gewindemäßig mit dem Hauptkörperabschnitt (14) zur gleitenden Positionierung des Klemmteils (23) längs der Achse in Eingriff steht, wobei die Schraubeinrichtung in einer ersten Richtung zum Antrieb des Klemmteils (23) längs der Achse zu einer vorbestimmten Lage, bei der die Schultern (35a, 35b) des Klemmteils und die Schultern (15a) der Bodenansätze (15) in einer festen Anlage gegen die Schiene zum Befestigen des Beschlags an der Schiene angeordnet werden können, und in einer zur ersten Richtung entgegengesetzten Richtung zum Antrieb des Klemmteils längs der Achse zu einer zweiten vorbestimmten Lage, bei der der Beschlag von der Schiene entfernt werden kann, drehbar ist, und

- eine Einrichtung (26) zum Festlegen der Schraubeinrichtung (25) gegen irgendeine wesentliche Längsbewegung relativ zum Klemmteil (23), umfaßt, dadurch gekennzeichnet,
- daß das Klemmteil (23) die Form eines Riegelbolzens hat, der einen Vorsprung (32) mit einer sich von jedem der Arme (23a, 23b) nach unten in Richtung der Bodenvorsprünge (15) direkt unterhalb jeder der Schultern (35a, 35b) des Riegelbolzens erstreckenden, gekrümmten Fläche (32a) aufweist, wodurch, wenn sich das riegelbolzenförmige Klemmteil (23) in der ersten vorbestimmten Lage befindet, die Vorsprünge (32) einen Riegelbolzen bilden, der in einen der Nutenabschnitte der Schiene einsetzbar ist.

2. Beschlag nach Anspruch 1, wobei die Bodenansätze (15) ein Paar beabstandeter Ansätze (15) umfassen, zwischen denen die Vorsprünge (32) des riegelbolzenförmigen Klemmteils (23) angeordnet sind.

3. Beschlag nach Anspruch 1 oder 2, wobei das riegelbolzenförmige Klemmteil (23) allgemein "U"-förmig ausgebildet ist.

4. Beschlag nach einem der Ansprüche 1 bis 3, wobei der Hauptkörperabschnitt (14) weiter einen sich davon in einer im wesentlichen zur Bodenfläche (15b) der Bodenansätze (15) senkrechten Richtung erstreckenden Bolzen (18) umfaßt, der eine darin ausgebildete Öffnung (18a) zur Festlegung der Last aufweist.

5. Beschlag nach einem der Ansprüche 1 bis 3, wobei der Hauptkörperabschnitt (14) weiter einen sich davon in einer im wesentlichen zur Bodenfläche (15b) der Bodenansätze (15) senkrechten Richtung erstreckenden Bolzen (18) umfaßt, der ein Gewinde zur Festlegung der Last aufweist.

FIG. 1

FIG. 2

FIG. 3

FIG. 4

FIG. 5